(19) Europäisches Patentamt / European Patent Office / Office européen des brevets

(11) **EP 3 590 090 B1**

(12) # EUROPEAN PATENT SPECIFICATION

(45) Date of publication and mention
of the grant of the patent:
**25.02.2026 Bulletin 2026/09**

(51) International Patent Classification (IPC):
**G06T 3/00** *(2024.01)* **H04N 13/156** *(2018.01)*
**H04N 13/282** *(2018.01)*

(21) Application number: **18817691.1**

(22) Date of filing: **14.06.2018**

(52) Cooperative Patent Classification (CPC):
**G06T 3/12; G06T 15/205; H04N 23/698; H04N 23/90**

(86) International application number:
**PCT/KR2018/006723**

(87) International publication number:
**WO 2018/230971 (20.12.2018 Gazette 2018/51)**

(54) **METHOD AND APPARATUS FOR PROCESSING OMNI-DIRECTIONAL IMAGE**

VERFAHREN UND VORRICHTUNG ZUR VERARBEITUNG OMNIDIREKTIONALER BILDER

PROCÉDÉ ET APPAREIL DE TRAITEMENT D'IMAGE OMNIDIRECTIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2017 US 201762520192 P**
**10.01.2018 KR 20180003502**

(43) Date of publication of application:
**08.01.2020 Bulletin 2020/02**

(73) Proprietor: **Samsung Electronics Co., Ltd.**
**Suwon-si, Gyeonggi-do 16677 (KR)**

(72) Inventors:
• **WOO, Ji-Hwan**
**Gyeonggi-do, 16677 (KR)**
• **CHOI, Byeong-Doo**
**Gyeonggi-do, 16677 (KR)**
• **YIP, Eric**
**Gyeonggi-do, 16677 (KR)**

(74) Representative: **Nederlandsch Octrooibureau**
**P.O. Box 29720**
**2502 LS The Hague (NL)**

(56) References cited:
**KR-A- 20170 017 700     US-A1- 2013 071 012**

• **CHEN WANG ET AL: "View Synthesis for Virtual Walk through in Real Scene Based on Catadioptric Omnidirectional Images", CYBERWORLDS, 2008 INTERNATIONAL CONFERENCE ON, IEEE, PISCATAWAY, NJ, USA, 22 September 2008 (2008-09-22), pages 150 - 156, XP031403649, ISBN: 978-0-7695-3381-0**
• **KIM HANSUNG ET AL: "3D Scene Reconstruction from Multiple Spherical Stereo Pairs", INTERNATIONAL JOURNAL OF COMPUTER VISION, KLUWER ACADEMIC PUBLISHERS, NORWELL, US, vol. 104, no. 1, 3 March 2013 (2013-03-03), pages 94 - 116, XP035362202, ISSN: 0920-5691, [retrieved on 20130303], DOI: 10.1007/S11263-013-0616-1**
• **SARTHAK PATHAK ET AL.: "Dense 3D Reconstruction from Two Spherical Images via Optical Flow-based Equirectangular Epipolar Rectification", 2016 IEEE INTERNATIONAL CONFERENCE ON IMAGING SYSTEMS AND TECHNIQUES (IST, 6 October 2016 (2016-10-06), pages 1 - 6, XP032996148**

- **YUN-SUK KANG ET AL.: "Stereo Image Rectification for Simple Panoramic Image Generation", GWANGJU INSTITUTE OF SCIENCE AND TECHNOLOGY (RESEARCHGATE), 4 January 2016 (2016-01-04), pages 1 - 6, XP055563573, Retrieved from the Internet <URL:https://www.researchgate.net/ publication/267387987_Stereo_Image_Rectificat ion_for_Simple_Panoramic_Image_Generation>**

- **LIN GUO- YU ET AL.: "A Robust Epipolar Rectification Method of Stereo Pairs", 2010 INTERNATIONAL CONFERENCE ON MEASURING TECHNOLOGY AND MECHATRONICS AUTOMATION, 14 March 2010 (2010-03-14), pages 322 - 326, XP055563579**

## Description

[Technical Field]

The present disclosure relates generally to a method and apparatus for processing an omni-directional image, and more particularly, to a method and apparatus for obtaining an omni-directional image having a new center from omni-directional images having different centers.

[Background Art]

Along with technologies associated with virtual reality (VR) and/or augmented reality (AR), improvements have been made in processing and transmitting omni-directional images (e.g., three-dimensional (3D) images) for display in devices capable of providing VR or AR.

An omni-directional image may be generated from an image acquired by an omni-directional camera or a plurality of images acquired by a plurality of two-dimensional (2D) cameras. To provide a realistic VR experience to a user in response to movement of a VR device, a plurality of omni-directional images having different centers are provided and an omni-directional image selected from among a plurality of omni-directional images is provided in response to the user's movement.

Chen Wang, et al., "View synthesis for virtual walk through in real scene based on catadioptric omnidirectional images" (Cyberworlds, 2008 International conference on IEEE, 22 September 2008) describes an approach based on image rectification and view interpolation for cylindrical panoramic images. The approach further discloses an epiline-sampling method for a cylindrical image, which grounds on the epipolar geometry and samples reference image along the epiline.

[Disclosure of Invention]

[Technical Problem]

Because it impossible to acquire omni-directional images by using a camera in all the possible positions, an omni-directional image centered in a region may not be acquired directly by a camera if the region is different from that of where the camera is arranged. Accordingly, an omni-directional image having a different center than the centers of previously acquired omni-directional images should be generated to provide a realistic VR experience to the user.

[Solution to Problem]

The invention is set out in the appended set of claims.

[Advantageous Effects of Invention]

According, an aspect of the disclosure is to provide a method and apparatus for generating an omni-directional image having a different center than those of already acquired omni-directional images.

[Brief Description of Drawings]

The above and other aspects, features and advantages of certain embodiments will be more apparent from the following description taken in conjunction with the accompanying drawings, in which:

FIG. 1 illustrates cameras and omni-directional images corresponding thereto, according to an embodiment;
FIG. 2 illustrates positions of a particular point indicated on a first omni-directional image and a second omni-directional image, according to an embodiment;
FIG. 3 illustrates first and second two-dimensional 2D images that are equirectangular projection (ERP)-projected from a first omni-directional image and a second omni-directional image, according to an embodiment;
FIG. 4 illustrates a method for generating a third 2D image based on first and second 2D images;
FIG. 5 illustrates a method for generating a third 2D image based on first and second 2D images;
FIG. 6 illustrates a method for setting a center of a third omni-directional image, according to an embodiment;
FIG. 7 is a flowchart illustrating a method for processing an omni-directional image, according to an embodiment;
FIG. 8 is a block diagram of an apparatus for processing an omni-directional image, according to an embodiment; and
FIG. 9 is a block diagram of an apparatus for processing an omni-directional image, according to an embodiment.

[Mode for the Invention]

Embodiments of the present disclosure are described with reference to the accompanying drawings.

Similar reference numerals may be used to indicate similar components that perform substantially the same functions throughout the specification.

As used herein, terms such as "first" and "second" or "1st" and "2nd" may be used to simply distinguish a corresponding component from another, and do not limit the components in other aspect (e.g., importance or order). Therefore, a first element mentioned below may be a second element, or vice versa, within the technical spirit of the disclosure.

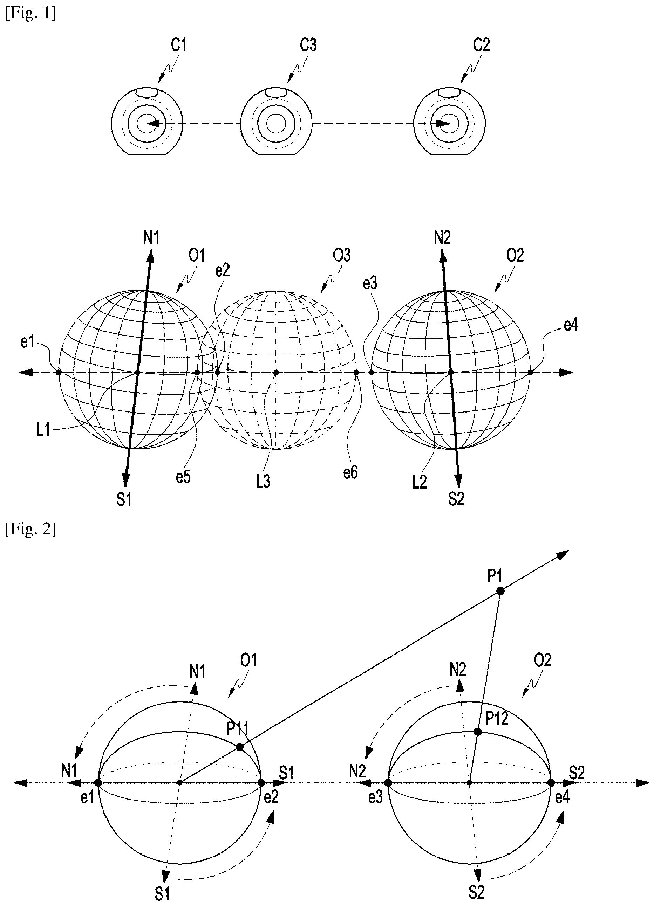

FIG. 1 illustrates cameras and omni-directional images corresponding thereto. according to an embodiment.

Referring to FIG. 1, each of a first camera C1 and a second camera C2 may be an omni-directional camera or a set of a plurality of cameras. A first omni-directional image O1 may be captured and generated by the first camera C1. A second omni-directional image O2 may be captured and generated by the second camera C2. Each of the first omni-directional image O1 and the second omni-directional image O2 may be rendered in the shape of a sphere. A center L1 of the first omni-directional image O1 corresponds to a location of the first camera C1. A center L2 of the second omni-directional image O2 corresponds to a location of the second camera C2.

Points at which a straight line passing through the center L1 of the first omni-directional image O1 and the center L2 of the second omni-directional image O2 intersects the first omni-directional image O1 and the second omni-directional image O2 are referred to as epipoles (e.g., poles) e1, e2, e3, and e4.

Data regarding a third omni-directional image O3 is generated based on data regarding the first omni-directional image O1 and data regarding the second omni-directional image O2. The third omni-directional image O3 corresponds to an image acquired by a third camera C3. The third camera C3 may be a virtual camera. A center L3 of the third omni-directional image O3 corresponds to a location of the third camera C3. The center L3 of the third omni-directional image O3 is located between the center L1 of the first omni-directional image O1 and the center L2 of the second omni-directional image O2 on the straight line passing through the center L1 of the first omni-directional image O1 and the center L2 of the second omni-directional image O2.

An axis passing through a north pole N1 and a south pole S1 of the first omni-directional image O1 and an axis passing through a north pole N2 and a south pole S2 of the second omni-directional image O2 may not be parallel with each other. In this case, a two-dimensional 2D image projected from the first omni-directional image O1 in an ERP manner with respect to the north pole N1 and the south pole S1 of the first omni-directional image O1 and a 2D image projected from the second omni-directional image O2 in the ERP manner with respect to the north pole N2 and the south pole S2 of the second omni-directional image O2 may not be aligned with each other. Generating data regarding a third omni-directional image O3 from the non-aligned 2D images increases the complexity of processing, which increases a system load and, in turn, increases power consumption of the system.

FIG. 2 illustrates positions of a particular point indicated on a first omni-directional image and a second omni-directional image, according to an embodiment.

Referring to FIG. 2, the north poles N1 and N2 and the south poles S1 and S2 of the omni-directional images O1 and O2 may be adjusted (e.g., reset) to positions of the first through fourth epipoles e1, e2, and e3, and e4. More specifically, the north pole N1 and the south pole S1 of the first omni-directional image O1 may be set to the first epipole e1 and the second epipole e2, respectively, and the north pole N2 and the south pole S2 of the second omni-directional image O2 may be set to the third epipole e3 and the fourth epipole e4, respectively.

A first point P1 on a space may be indicated at a first position p11 on the first omni-directional image O1 and a second position p12 on the second omni-directional image O2. Based on the adjusted north poles N1 and N2 and south poles S1 and S2 of the first and second omni-directional images O1 and O2, the first position p11 and the second position p12 have the same longitude as each other. A position on the first omni-directional image O1 where an arbitrary point is the first point P1 on a space is indicated, and a position on the second omni-directional image O2 where an arbitrary point is indicated (e.g., P12) have the same longitude as each other.

Based on the adjusted north poles N1 and N2 and south poles S1 and S2 of the first and second omni-directional images O1 and O2, ERP projection is performed with respect to the first and second omni-directional images O1 and O2.

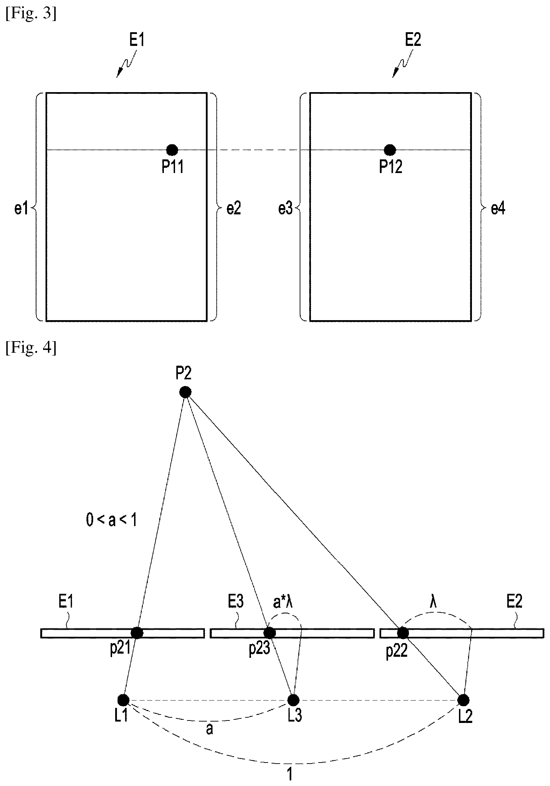

FIG. 3 illustrates first and second 2D images that are ERP-projected from a first omni-directional image and a second omni-directional image, according to an embodiment.

Referring to FIG. 3, a first 2D image E1 and a second 2D image E2 are generated by being ERP-projected from the first omni-directional image O1 and the second omni-directional image O2, respectively. A left side and a right side of the first 2D image E1 correspond to the first epipole e1 and the second epipole e2, respectively. In an ERP-projection as illustrated in FIG. 2, a y coordinate of a particular position on a 2D image corresponds to a longitude of a corresponding position on an omni-directional image. An x coordinate of the particular position on the 2D image corresponds to an angle between the corresponding position on the omni-directional image and the north pole (e.g., an epipole) with respect to a center of the omni-directional image. Thus, the y coordinate of the first position p11 on the first 2D image E1 and the y coordinate of the second position p12 on the second 2D image E2 is the same as each other. Likewise, the y coordinate of an arbitrary position on the first 2D image E1 and the y coordinate of a corresponding position on the second 2D image E2 is the same as each other.

That is, according to FIGS. 2 and 3, corresponding positions on the 2D images E1 and E2 are aligned on the same y coordinates, simplifying a process for generating the data regarding the third omni-directional image O3 based on the 2D images E1 and E2.

FIG. 4 illustrates a method for generating a third 2D image based on first and second 2D images, according to the invention.

Referring to FIG. 4, a second point P2 on a space may be indicated at a third position p21 on the first 2D image E1 and a fourth position p22 on the second 2D image E2. The third 2D image E3 corresponds to an image that is ERP-projected from the third omni-directional image O3. The second point P2 may be indicated at a fifth position p23 on the third 2D image E3.

Y coordinates of the third position p21, the fourth position p22, and the fifth position p23 are the same as one another as described above with reference to FIGS. 2 and 3.

A disparity value between an x coordinate of the third position p21 and an x coordinate of the fourth position p22 may be expressed with $\lambda$. That is, when the x coordinate of the third position p21 is x1 and the x coordinate of the fourth position p22 is x2, $\lambda$ = x1 - x2. When an x coordinate of the fifth position p23 is x3, x3 = x1 - (a) $\times$ $\lambda$. Accordingly, (a) indicates a ratio of a distance between the center L1 of the first omni-directional image O1 and the center L3 of the third omni-directional image O3 with respect to a distance between the center L1 of the first omni-directional image O1 and the center L2 of the second omni-directional image O2. By identifying positions on the third 2D image E3, which correspond to points on a space, in this way, the third 2D image E3 is generated. The third 2D image E3 corresponds to a 2D image generated by setting points e5 and e6 (e.g., epipoles) on the third omni-directional image O3, which intersect the straight line passing through the center L1 of the first omni-directional image O1 and the center L2 of the second omni-directional image O2, to the north poles and the south poles and projecting the third omni-directional image O3 as an ERP.

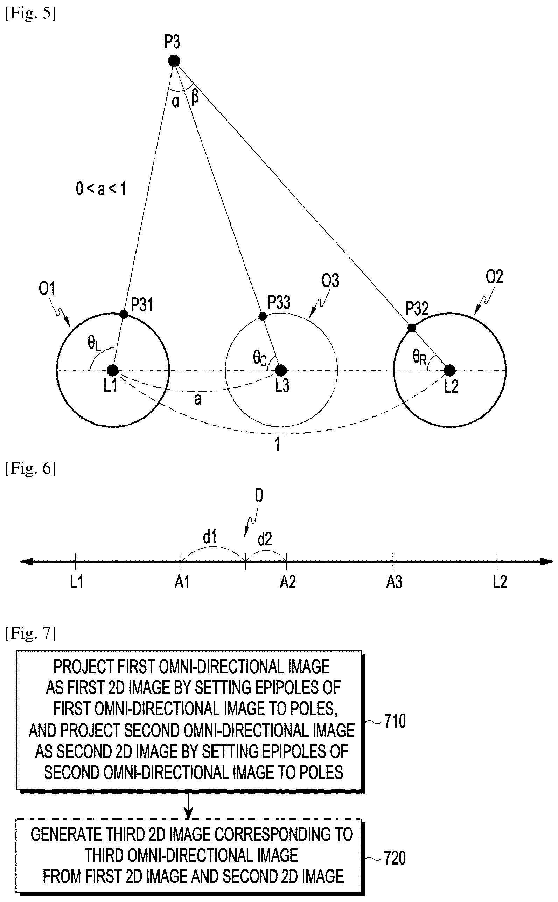

FIG. 5 illustrates a method for generating a third 2D image based on first and second 2D images, according to an embodiment.

Referring to FIG. 5, a third point P3 on a space is indicated at a sixth position p31 on the first omni-directional image O1, a seventh position p32 on the second omni-directional image O2, and an eighth position p33 on the third omni-directional image O3. An x coordinate of a position on an ERP-projected 2D image corresponding to a particular position on an omni-directional image corresponds to an angle between the north pole (e.g., an epipole) of the omni-directional image and the particular position on the omni-directional image with respect to the center of the omni-directional image. Thus, an x coordinate of the sixth position p31 on the first 2D image E1 corresponds to $\theta_L$. An x coordinate of the seventh position p32 on the second 2D image E2 corresponds to $\theta_R$. A disparity value between the x coordinate of the sixth position p31 on the first 2D image E1 and the x coordinate of the seventh position p32 on the second 2D image E2 is expressed as $\theta_L - \theta_R$ which equals $\alpha + \beta$. $\alpha$ is an angle from the third point P3 between the center L1 of the first omnidirectional image O1 and the center L3 of the third omnidirectional image O3 or between the sixth position p31 and the eighth position p33. $\beta$ is an angle from the third point P3 between the center L2 of the second omnidirectional image O2 and the center L3 of the third omnidirectional image O3 or between the seventh position p32 and the eighth position p33.

An x coordinate of the eighth position p33 on the 2D image that is ERP-projected from the third omni-directional image O3 corresponds to $\theta_C$, where $\theta_C = \theta_L - \alpha$. Herein, $\alpha$ is given as shown in Equation (1) below.

A.

$$\alpha = tan^{-1}\left(\frac{sin(\theta_L - \theta_R)}{\frac{(1-a)}{asin\theta_L} + cos(\theta_L - \theta_R)}\right) \qquad \cdots (1)$$

Y coordinates of the sixth position p31, the seventh position p32, and the eighth position p33 on the 2D image are the same as one another.

By identifying positions on the 2D image ERP-projected from the third omni-directional image O3, which correspond to points on a space, in this way, the 2D image is generated by setting the epipoles e5 and e6 to the north poles and the south poles and projecting the third omni-directional image O3 in the ERP manner.

FIG. 6 illustrates a method for setting a center of a third omni-directional image, according to an embodiment.

Referring to FIG. 6, the center L3 of the third omni-directional image O3 may be selected from among quantized positions A1, A2, and A3 between the center L1 of the first omni-directional image O1 and the center L2 of the second omni-directional image O2 on the straight line passing through the center L1 of the first omni-directional image O1 and the center L2 of the second omni-directional image O2. The number of quantized positions may be set differently according to embodiments. Intervals between the center L1 of the first omni-directional image O1, the center L2 of the second omni-directional image O2, and the plurality of quantized positions A1, A2, and A3 may be set uniformly, but the disclosure is not limited thereto.

In various embodiments, among the plurality of quantized positions A1, A2, and A3, a position closest to a device D for displaying an omni-directional image or a user of the device D may be set as the center L3 of the third omni-directional image O3.

The second quantized position A2 may be set as the center L3 of the third omni-directional image O3. When each distance between each of the plurality of quantized positions A1, A2, and A3 and the device D for displaying an omni-directional image or the user of the device D is larger than the distance between the center L1 of the first omni-directional image O1 and the device D for displaying an omni-directional image, or larger than the distance between the center L1 of the first omni-directional image O1 and the user of the device D, an image corresponding to the first omni-directional image O1 may be displayed in the device D for displaying an omni-directional image. The third omni-directional image O3 may not be generated or may not be delivered to the device D for displaying an omni-directional image.

When the device D or the user thereof, is moving, a ratio of a distance between the closest quantized position among the plurality of quantized positions A1, A2, and A3 and the device D with respect to a distance between a center of an omni-directional image currently displayed on the device D and the device D is less than or equal to a threshold value, the device D displays an omni-directional image centered in the closest quantized position.

Accordingly, an apparatus (e.g., a server) for transmitting data regarding an omni-directional image generates data regarding an omni-directional image centered in the closest quantized position and transmits the generated data to the device D.

Referring to FIG. 6, when an omni-directional image centered in the first quantized position A1 is currently displayed on the device D, a ratio of a distance d2 between the device D and the second quantized position A2 with respect to a distance d1 between the device D and the first quantized position A1 is less than or equal to a threshold value, the device D displays an omni-directional image centered in the second quantized position A2.

An apparatus for transmitting data regarding an omni-directional image previously generates and stores data regarding an omni-directional image centered in each of the plurality of quantized positions A1, A2, and A3, and transmits, to the device D, data regarding the omni-directional image, which is selected due to a need from among previously generated and stored data regarding a plurality of omni-directional images.

The device D stores the data regarding the omni-directional image centered in each of the plurality of quantized positions A1, A2, and A3, retrieves the data regarding the omni-directional image, which is selected due to a need from among the previously stored data regarding the plurality of omni-directional images, and displays the selected omni-directional image.

FIG. 7 is a flowchart illustrating a method for processing an omni-directional image, according to an embodiment.

Referring to FIG. 7, in step 710, a first omni-directional image is projected as a first 2D image by setting epipoles of the first omni-directional image to poles, and a second omni-directional image is projected as a 2D image by setting epipoles of the second omni-directional image to poles. Detailed operations of step 710 are similar as described with reference FIGS. 2 and 3.

In step 720, a third 2D image corresponding to a third omni-directional image is generated from the first 2D image and the second 2D image. Detailed operations of step 720 may be the operations described with reference to FIG. 4 or the operations described with reference to FIG. 5.

Steps 710 and 720 may be performed by an apparatus (e.g., a server) for transmitting data regarding an omni-directional image. In various embodiments, steps 710 and 720 may be performed by an apparatus (e.g., a VR device) for displaying data regarding an omni-directional image.

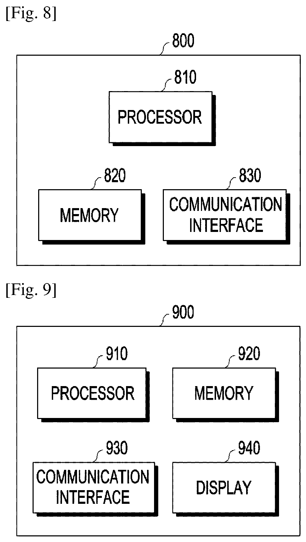

FIG. 8 is a block diagram of an apparatus for processing an omni-directional image, according to an embodiment.

Referring to FIG. 8, an apparatus 800 for processing an omni-directional image may be an apparatus for transmitting data regarding an omni-directional image (e.g., a server). The apparatus 800 generates data regarding the third omni-directional image O3 and transmits the generated data using the above-described methods. The data regarding third omni-directional image O3 is based on a 2D image corresponding to a 2D image that is ERP-projected from the third omni-directional image O3. The apparatus 800 may transmit data regarding the 2D image corresponding to the 2D image that is ERP-projected from the third omni-directional image O3 by using a protocol such as the Moving Picture Experts Group (MPEG).

For convenience of a display in a receiving side, the apparatus 800 converts the generated 2D image into a 2D image corresponding to a 2D image that is ERP-projected based on the different poles of the third omni-directional image O3. Transmission of the data regarding the 2D image may be based on the converted 2D image. In various embodiments, packing according to region (e.g., region-wise) may be performed on the 2D image. Region-wise packing means dividing the 2D image into a plurality of regions and performing transformation, rotation, re-sampling, or re-arrangement with respect to each of the plurality of regions.

The apparatus 800 includes a processor 810, a memory 820, and a communication interface 830. The processor 810 substantially performs and controls operations performed in the apparatus 800. The processor 810 is electrically connected with the memory 820 and the communication interface 830 for communication, and controls operations of the memory 820 and the communication interface 830. Thus, operations performed directly by the memory 820 or the communication interface 830 may be interpreted as being substantially performed by the processor 810. The memory 820 transitorily or non-transitorily stores data needed for operations of the apparatus 800 or the processor 810. The memory 820 stores instructions or codes that are executable by the processor 810. The communication interface 830 may be configured to transmit and/or receive data.

FIG. 9 is a block diagram of an apparatus for processing an omni-directional image, according to an embodiment.

Referring to FIG. 9, an apparatus 900 may be an apparatus for displaying an omni-directional image (e.g., a VR device). The apparatus 900 receives data regarding an omni-directional image and displays the received data. For example, the apparatus may receive data regarding the third omni-directional image O3 based on an image corresponding to an image that is ERP-projected from the third omni-directional image O3 generated by the above-described methods, and display at least a part of the third omni-directional image O3 based on the received data.

The apparatus 900 receives data regarding the first omni-directional image O1 and data regarding the second omni-directional image O2. The data regarding the first omni-directional image O1 may be data regarding the first 2D image E1, and the data regarding the second omni-directional image O2 may be data regarding the second 2D image E2. The apparatus 900 generates data regarding a 2D image corresponding to an image that is ERP-projected from the third omni-directional image O3 by using the above-described methods based on the data regarding the first 2D image E1 and the data regarding the second 2D image E2. The apparatus 900 displays at least a part of the third omni-directional image O3 based on the generated data regarding the 2D image.

The apparatus 900 includes a processor 910, a memory 920, a communication interface 930, and a display 940. A description of the processor 910, the memory 920, and the communication interface 930 is substantially similar to that of the processor 810, the memory 820, and the communication interface 830 of the apparatus 800 of FIG. 8. The display 940 displays an image under control of the processor 910.

Accordingly, embodiments of the disclosure provide, at least, a method and apparatus for generating an omni-directional image having a different center than those of existing omni-directional images. Additionally, the method and apparatus provided may reduce a computational load necessary for processing omni-directional images.

While the present disclosure has been particularly shown and described with reference to certain embodiments thereof, it will be understood by those of ordinary skill in the art that various changes in form and details may be made therein without departing from the scope of the present disclosure as defined by the appended claims.

**Claims**

1. A computer-implemented method for processing information about an omni-directional image, the method comprising:

   generating a first two-dimensional, 2D, image (E1) projected from a first omni-directional image (O1) using equirectangular projection, ERP, by setting points on the first omni-directional image, which intersect a straight line passing through a first position (L1) that is a center of the first omni-directional image and a second position (L2) that is a center of a second omni-directional image, to a first pole (e1), and a second pole (e2), wherein the first pole (e1) of the first omni-directional image (O1) is set as a north pole (N1) of the first omni-directional image (O1), and the second pole (e2) is set as a south pole (S1) of the first omni-directional image (O1);
   generating a second 2D image (E2) projected from the second omni-directional image (O2) using the ERP, by setting points on the second omni-directional image, which intersect the straight line passing through the first position (L1) and the second position (L2), to a third pole (e3) and a fourth pole (e4), wherein the third pole (e3) of the second omni-directional image (O2) is set as a north pole (N2) of the second omni-directional image (O2), and the fourth pole (e4) is set as a south pole (S2) of the second omni-directional image (O2); and
   generating a third 2D image (E3) corresponding to a 2D image projected from a third omni-directional image (O3) using the ERP by setting points on the third omni-directional image (O3), which intersect the straight line, to a fifth pole (e5) and a sixth pole (e6), based on the first 2D image and the second 2D image, the third omni-directional image (O3) being centered in a third position (L3) between the first position (L1) and the second position (L2), wherein the fifth pole (e5) of the third omni-directional image (O3) is set as a north pole of the third omni-directional image (O3), and the sixth pole (e6) is set as a south pole of the third omni-directional image (O3), wherein generating the third 2D image (E3) further comprises identifying third coordinates (p23) on the third 2D image (E3) where a fourth position is projected from the third position (L3) on the third 2D image (E3), and the third coordinates (p23) correspond to first coordinates (p21) on the first 2D image (E1) where the fourth position is projected from the first position (L1) on the first 2D image (E1), and second coordinates (p22) on the second 2D image (E2) where the fourth position is projected form the second position (L2) on the second 2D image (E2), respectively, and

wherein the first coordinates, the second coordinates, and the third coordinates have the same y coordinate, and are defined as follows:

$$\theta_C = \theta_L - \alpha$$

$$\alpha = tan^{-1}\left(\frac{sin(\theta_L - \theta_R)}{\frac{(1-a)}{a sin\theta_L} + cos(\theta_L - \theta_R)}\right),$$

and
wherein:

$\theta_C$ indicates an x coordinate of the third coordinates, and an angle between the north pole of the third omni-directional image (O3) and the fourth position with respect to the third position (L3),
$\theta_L$ indicates an x coordinate of the first coordinates, and an angle between the north pole (N1) of the first omni-directional image (O1) and the fourth position with respect to the first position (L1),
$\theta_R$ indicates an x coordinate of the second coordinates, and an angle between the north pole (N2) of the second omni-directional image (O2) and the fourth position with respect to the second position (L2), and
*a* indicates a ratio of a distance between the first position and the third position with respect to a distance between the first position and the second position.

2. A computer-implemented method for processing information about an omni-directional image, the method comprising:

generating a first two-dimensional, 2D, image (E1) projected from a first omni-directional image (O1) using equirectangular projection, ERP, by setting points on the first omni-directional image, which intersect a straight line passing through a first position (L1) that is a center of the first omni-directional image and a second position (L2) that is a center of a second omni-directional image, to a first pole, (e1), and a second pole (e2), wherein the first pole (e1) of the first omni-directional image (O1) is set as a north pole (N1) of the first omni-directional image (O1), and the second pole (e2) is set as a south pole (S1) of the first omni-directional image (O1);
generating a second 2D image (E2) projected from the second omni-directional image (O2) using the ERP, by setting points on the second omni-directional image, which intersect the straight line passing through the first position (L1) and the second position (L2), to a third pole (e3) and a fourth pole (e4), wherein the third pole (e3) of the second omni-directional image (O2) is set as a north pole (N2) of the second omni-directional image (O2), and the fourth pole (e4) is set as a south pole (S2) of the second omni-directional image (O2); and
generating a third 2D image (E3) corresponding to a 2D image projected from a third omni-directional image (O3) using the ERP by setting points on the third omni-directional image (O3), which intersect the straight line, to a fifth pole (e5) and a sixth pole (e6), based on the first 2D image and the second 2D image, the third omni-directional image (O3) being centered in a third position (L3) between the first position (L1) and the second position (L2), wherein the fifth pole (e5) of the third omni-directional image (O3) is set as a north pole of the third omni-directional image (O3), and the sixth pole (e6) is set as a south pole of the third omni-directional image (O3),
wherein generating the third 2D image (E3) further comprises identifying third coordinates (p23) on the third 2D image (E3) where a fourth position is projected from the third position (L3) on the third 2D image (E3), and the third coordinates (p23) correspond to first coordinates (p21) on the first 2D image (E1) where the fourth position is projected from the first position (L1) on the first 2D image (E1), and second coordinates (p22) on the second 2D image (E2) where the fourth position is projected form the second position (L2) on the second 2D image (E2), respectively, and
wherein the first coordinates, the second coordinates, and the third coordinates have the same y coordinate, and are defined as follows:

$$x3 = x1 - a \times (x1 - x2),$$

and
wherein:

x1 indicates an x coordinate of the first coordinates, and an angle between the north pole of the third omni-directional image (O3) and the fourth position with respect to the third position (L3),

x2 indicates an x coordinate of the second coordinates, and an angle between the north pole (N1) of the first omni-directional image (O1) and the fourth position with respect to the first position (L1),

x3 indicates an x coordinate of the third coordinates, and an angle between the north pole (N2) of the second omni-directional image (O2) and the fourth position with respect to the second position (L2), and

*a* indicates a ratio of a distance between the first position and the third position with respect to a distance between the first position and the second position.

3. The method of claim 1, further comprising converting the third 2D image (E3) into a fourth 2D image,

wherein the third 2D image corresponds to a 2D image projected by setting points on the third omni-directional image, which intersect the straight line passing through the first position and the second position, to a fifth pole and a sixth pole, and

wherein the fourth 2D image corresponds to a 2D image projected from the third omni-directional image based on poles that are different from the fifth pole and the sixth pole.

4. The method of claim 1, further comprising transmitting information about the third omni-directional image (O3) based on the third 2D image (E3).

5. The method of claim 1, wherein each of the first omni-directional image (O1), the second omni-directional image (O2), and the third omni-directional image (O3) are respectively rendered in a spherical shape.

6. The method of claim 1, wherein the first omni-directional image (O1) is acquired by a first camera (C1) located in the first position, and the second omni-directional image (O2) is acquired by a second camera (C2) located in the second position.

7. The method of claim 1, wherein the third position is one of a plurality of quantized positions on the straight line between the first position and the second position.

8. The method of claim 7, wherein the third position is a position closest to an apparatus for displaying the third omni-directional image (O3) among the plurality of quantized positions.

9. An apparatus (800, 900) for processing information about an omni-directional image, the apparatus comprising:

a communication interface (830, 930); and

a processor (810, 910) coupled to the communication interface, wherein the processor is configured to be operated according to one of claims 1 to 8.

**Patentansprüche**

1. Computerimplementiertes Verfahren zur Verarbeitung von Informationen über ein omnidirektionales Bild, wobei das Verfahren Folgendes umfasst:

Erzeugen eines ersten zweidimensionalen, 2D, Bildes (E1), das aus einem ersten omnidirektionalen Bild (O1) unter Verwendung äquirektangulärer Projektion, ERP, projiziert wird, indem Punkte auf dem ersten omnidirektionalen Bild festgelegt werden, die eine gerade Linie schneiden, die durch eine erste Position (L1), die ein Mittelpunkt des ersten omnidirektionalen Bildes ist, und eine zweite Position (L2), die ein Mittelpunkt eines zweiten omnidirektionalen Bildes ist, zu einem ersten Pol (e1) und einem zweiten Pol (e2) verläuft, wobei der erste Pol (e1) des ersten omnidirektionalen Bildes (O1) als Nordpol (N1) des ersten omnidirektionalen Bildes (O1) festgelegt wird und der zweite Pol (e2) als Südpol (S1) des ersten omnidirektionalen Bildes (O1) festgelegt wird;

Erzeugen eines zweiten 2D-Bildes (E2), das aus dem zweiten omnidirektionalen Bild (O2) unter Verwendung der ERP projiziert wird, indem Punkte auf dem zweiten omnidirektionalen Bild festgelegt werden, die die gerade Linie schneiden, die durch die erste Position (L1) und die zweite Position (L2) zu einem dritten Pol (e3) und einem vierten Pol (e4) verläuft, wobei der dritte Pol (e3) des zweiten omnidirektionalen Bildes (O2) als Nordpol (N2) des zweiten omnidirektionalen Bildes (O2) festgelegt wird und der vierte Pol (e4) als Südpol (S2) des zweiten omnidirektionalen Bildes (O2) festgelegt wird; und

Erzeugen eines dritten 2D-Bildes (E3), das einem aus einem dritten omnidirektionalen Bild (O3) projizierten 2D-Bild entspricht, unter Verwendung der ERP, indem Punkte auf dem dritten omnidirektionalen Bild (O3) festgelegt werden, die die gerade Linie zu einem fünften Pol (e5) und einem sechsten Pol (e6) schneiden, basierend auf dem ersten 2D-Bild und dem zweiten 2D-Bild, wobei das dritte omnidirektionale Bild (O3) in einer dritten Position (L3) zwischen der ersten Position (L1) und der zweiten Position (L2) zentriert ist, wobei der fünfte Pol (e5) des dritten omnidirektionalen Bildes (O3) als Nordpol des dritten omnidirektionalen Bildes (O3) festgelegt wird und der sechste Pol (e6) als Südpol des dritten omnidirektionalen Bildes (O3) festgelegt wird,

wobei das Erzeugen des dritten 2D-Bildes (E3) ferner das Identifizieren von dritten Koordinaten (p23) auf dem dritten 2D-Bild (E3) umfasst, wobei eine vierte Position von der dritten Position (L3) auf das dritte 2D-Bild (E3) projiziert wird und die dritten Koordinaten (p23) den ersten Koordinaten (p21) auf dem ersten 2D-Bild (E1) entsprechen, wobei die vierte Position von der ersten Position (L1) auf das erste 2D-Bild (E1) projiziert wird, bzw. von zweiten Koordinaten (p22) auf dem zweiten 2D-Bild (E2), wobei die vierte Position von der zweiten Position (L2) auf das zweite 2D-Bild (E2) projiziert wird, und

wobei die ersten Koordinaten, die zweiten Koordinaten und die dritten Koordinaten die gleiche y-Koordinate haben und wie folgt definiert sind:

$$\theta_C = \theta_L - \alpha$$

$$\alpha = tan^{-1}\left(\frac{sin(\theta_L - \theta_R)}{\frac{(1-a)}{a sin\theta_L} + cos(\theta_L - \theta_R)}\right),$$

und
wobei:

$\theta_C$ eine x-Koordinate der dritten Koordinaten und einen Winkel zwischen dem Nordpol des dritten omnidirektionalen Bildes (O3) und der vierten Position in Bezug auf die dritte Position (L3) anzeigt,

$\theta_L$ eine x-Koordinate der ersten Koordinaten und einen Winkel zwischen dem Nordpol (N1) des ersten omnidirektionalen Bildes (O1) und der vierten Position in Bezug auf die erste Position (L1) anzeigt,

$\theta_R$ eine x-Koordinate der zweiten Koordinaten und einen Winkel zwischen dem Nordpol (N2) des zweiten omnidirektionalen Bildes (O2) und der vierten Position in Bezug auf die zweite Position (L2) anzeigt, und

$\alpha$ ein Verhältnis eines Abstands zwischen der ersten Position und der dritten Position in Bezug auf einen Abstand zwischen der ersten Position und der zweiten Position anzeigt.

2.  Computerimplementiertes Verfahren zur Verarbeitung von Informationen über ein omnidirektionales Bild, wobei das Verfahren Folgendes umfasst:

Erzeugen eines ersten zweidimensionalen, 2D, Bildes (E1), das von einem ersten omnidirektionalen Bild (O1) unter Verwendung äquirektangulärer Projektion, ERP, projiziert wird, indem Punkte auf dem ersten omnidirektionalen Bild festgelegt werden, die eine gerade Linie schneiden, die durch eine erste Position (L1), die ein Mittelpunkt des ersten omnidirektionalen Bildes ist, und eine zweite Position (L2), die ein Mittelpunkt eines zweiten omnidirektionalen Bildes ist, zu einem ersten Pol (e1) und einem zweiten Pol (e2) verläuft, wobei der erste Pol (e1) des ersten omnidirektionalen Bildes (O1) als Nordpol (N1) des ersten omnidirektionalen Bildes (O1) festgelegt wird und der zweite Pol (e2) als Südpol (S1) des ersten omnidirektionalen Bildes (O1) festgelegt wird;

Erzeugen eines zweiten 2D-Bildes (E2), das aus dem zweiten omnidirektionalen Bild (O2) unter Verwendung der ERP projiziert wird, indem Punkte auf dem zweiten omnidirektionalen Bild festgelegt werden, die die gerade Linie schneiden, die durch die erste Position (L1) und die zweite Position (L2) zu einem dritten Pol (e3) und einem vierten Pol (e4) verläuft, wobei der dritte Pol (e3) des zweiten omnidirektionalen Bildes (O2) als Nordpol (N2) des zweiten omnidirektionalen Bildes (O2) festgelegt wird und der vierte Pol (e4) als Südpol (S2) des zweiten omnidirektionalen Bildes (O2) festgelegt wird; und

Erzeugen eines dritten 2D-Bildes (E3), das einem aus einem dritten omnidirektionalen Bild (O3) projizierten 2D-Bild entspricht, unter Verwendung der ERP, indem Punkte auf dem dritten omnidirektionalen Bild (O3) festgelegt werden, die die gerade Linie zu einem fünften Pol (e5) und einem sechsten Pol (e6) schneiden, basierend auf dem ersten 2D-Bild und dem zweiten 2D-Bild, wobei das dritte omnidirektionale Bild (O3) in einer dritten Position (L3) zwischen der ersten Position (L1) und der zweiten Position (L2) zentriert ist, wobei der fünfte Pol (e5) des dritten omnidirektionalen Bildes (O3) als Nordpol des dritten omnidirektionalen Bildes (O3) festgelegt wird und der sechste Pol (e6) als Südpol des dritten omnidirektionalen Bildes (O3) festgelegt wird,

wobei das Erzeugen des dritten 2D-Bildes (E3) ferner das Identifizieren von dritten Koordinaten (p23) auf dem dritten 2D-Bild (E3) umfasst, wobei eine vierte Position von der dritten Position (L3) auf das dritte 2D-Bild (E3) projiziert wird und die dritten Koordinaten (p23) den ersten Koordinaten (p21) auf dem ersten 2D-Bild (E1) entsprechen, wobei die vierte Position von der ersten Position (L1) auf das erste 2D-Bild (E1) projiziert wird, bzw. von zweiten Koordinaten (p22) auf dem zweiten 2D-Bild (E2), wobei die vierte Position von der zweiten Position (L2) auf das zweite 2D-Bild (E2) projiziert wird, und

wobei die ersten Koordinaten, die zweiten Koordinaten und die dritten Koordinaten die gleiche y-Koordinate haben und wie folgt definiert sind:

$$x3 = x1 - a \ x \ (x1 - x2),$$

und
wobei:

x1 eine x-Koordinate der ersten Koordinaten und einen Winkel zwischen dem Nordpol des dritten omnidirektionalen Bildes (O3) und der vierten Position in Bezug auf die dritte Position (L3) anzeigt,
x2 eine x-Koordinate der zweiten Koordinaten und einen Winkel zwischen dem Nordpol (N1) des ersten omnidirektionalen Bildes (O1) und der vierten Position in Bezug auf die erste Position (L1) anzeigt,
x3 eine x-Koordinate der dritten Koordinaten und einen Winkel zwischen dem Nordpol (N2) des zweiten omnidirektionalen Bildes (O2) und der vierten Position in Bezug auf die zweite Position (L2) anzeigt, und
$\alpha$ ein Verhältnis eines Abstands zwischen der ersten Position und der dritten Position in Bezug auf einen Abstand zwischen der ersten Position und der zweiten Position anzeigt.

3. Verfahren nach Anspruch 1, das ferner das Umwandeln des dritten 2D-Bildes (E3) in ein viertes 2D-Bild umfasst,

wobei das dritte 2D-Bild einem 2D-Bild entspricht, das durch Festlegen von Punkten auf das dritte omnidirektionale Bild projiziert wird, die die gerade Linie schneiden, die durch die erste und die zweite Position zu einem fünften Pol und einem sechsten Pol verläuft, und
wobei das vierte 2D-Bild einem aus dem dritten omnidirektionalen Bild projizierten 2D-Bild entspricht, basierend auf Polen, die sich von dem fünften und dem sechsten Pol unterscheiden.

4. Verfahren nach Anspruch 1, das ferner das Übertragen von Informationen über das dritte omnidirektionale Bild (O3) basierend auf dem dritten 2D-Bild (E3) umfasst.

5. Verfahren nach Anspruch 1, wobei das erste omnidirektionale Bild (O1), das zweite omnidirektionale Bild (O2) und das dritte omnidirektionale Bild (O3) jeweils in einer Kugelform wiedergegeben werden.

6. Verfahren nach Anspruch 1, wobei das erste omnidirektionale Bild (O1) von einer ersten Kamera (C1) aufgenommen wird, die sich in der ersten Position befindet, und das zweite omnidirektionale Bild (O2) von einer zweiten Kamera (C2) aufgenommen wird, die sich in der zweiten Position befindet.

7. Verfahren nach Anspruch 1, wobei die dritte Position eine einer Vielzahl von quantisierten Positionen auf der geraden Linie zwischen der ersten Position und der zweiten Position ist.

8. Verfahren nach Anspruch 7, wobei die dritte Position eine Position ist, die einer Vorrichtung zum Anzeigen des dritten omnidirektionalen Bildes (O3) aus der Vielzahl von quantisierten Positionen am nächsten liegt.

9. Vorrichtung (800, 900) zur Verarbeitung von Informationen über ein omnidirektionales Bild, wobei die Vorrichtung Folgendes umfasst:

eine Kommunikationsschnittstelle (830, 930); und
einen Prozessor (810, 910), der mit der Kommunikationsschnittstelle gekoppelt ist, wobei der Prozessor so konfiguriert ist, dass er nach einem der Ansprüche 1 bis 8 betrieben wird.

**Revendications**

1. Procédé mis en œuvre par ordinateur pour traiter des informations relatives à une image omnidirectionnelle, le procédé comprenant :

générer une première image bidimensionnelle, 2D, (E1) projetée à partir d'une première image omnidirectionnelle (O1) à l'aide d'une projection équirectangulaire, ERP, en définissant des points sur la première image omnidirectionnelle, qui coupent une ligne droite passant par une première position (L1) qui est le centre de la première image omnidirectionnelle et une deuxième position (L2) qui est le centre d'une deuxième image omnidirectionnelle, en un premier pôle (e1), et un deuxième pôle (e2), où le premier pôle (e1) de la première image omnidirectionnelle (O1) est défini comme pôle nord (N1) de la première image omnidirectionnelle (O1), et le deuxième pôle (e2) est défini comme pôle sud (S1) de la première image omnidirectionnelle (O1) ;

générer une deuxième image 2D (E2) projetée à partir de la deuxième image omnidirectionnelle (O2) à l'aide de l'ERP, en définissant des points sur la deuxième image omnidirectionnelle, qui coupent la ligne droite passant par la première position (L1) et la deuxième position (L2), en un troisième pôle (e3) et un quatrième pôle (e4), où le troisième pôle (e3) de la deuxième image omnidirectionnelle (O2) est défini comme un pôle nord (N2) de la deuxième image omnidirectionnelle (O2), et le quatrième pôle (e4) est défini comme un pôle sud (S2) de la deuxième image omnidirectionnelle (O2) ; et

générer une troisième image 2D (E3) correspondant à une image 2D projetée à partir d'une troisième image omnidirectionnelle (O3) en utilisant l'ERP en définissant des points sur la troisième image omnidirectionnelle (O3), qui coupent la ligne droite, en un cinquième pôle (e5) et un sixième pôle (e6), sur la base de la première image 2D et de la deuxième image 2D, la troisième image omnidirectionnelle (O3) étant centrée dans une troisième position (L3) entre la première position (L1) et la deuxième position (L2), où le cinquième pôle (e5) de la troisième image omnidirectionnelle (O3) est défini comme un pôle nord de la troisième image omnidirectionnelle (O3), et le sixième pôle (e6) est défini comme un pôle sud de la troisième image omnidirectionnelle (O3),

où la génération de la troisième image 2D (E3) comprend en outre l'identification de troisièmes coordonnées (p23) sur la troisième image 2D (E3) où une quatrième position est projetée à partir de la troisième position (L3) sur la troisième image 2D (E3), et les troisièmes coordonnées (p23) correspondent aux premières coordonnées (p21) sur la première image 2D (E1) où la quatrième position est projetée à partir de la première position (L1) sur la première image 2D (E1), et de deuxièmes coordonnées (p22) sur la deuxième image 2D (E2) où la quatrième position est projetée à partir de la deuxième position (L2) sur la deuxième image 2D (E2), respectivement, et où les premières coordonnées, les deuxièmes coordonnées et les troisièmes coordonnées ont la même coordonnée y et sont définies comme suit :

$$\theta_C = \theta_L - \alpha$$

$$\alpha = tan^{-1}\left(\frac{sin(\theta_L - \theta_R)}{\frac{(1-a)}{a sin\theta_L} + cos(\theta_L - \theta_R)}\right)$$

et

où :

$\theta_C$ indique une coordonnée x des troisièmes coordonnées et un angle entre le pôle nord de la troisième image omnidirectionnelle (O3) et la quatrième position par rapport à la troisième position (L3),

$\theta_L$ indique une coordonnée x des premières coordonnées, et un angle entre le pôle nord (N1) de la première image omnidirectionnelle (O1) et la quatrième position par rapport à la première position (L1),

$\theta_R$ indique une coordonnée x des deuxièmes coordonnées, et un angle entre le pôle nord (N2) de la deuxième image omnidirectionnelle (O2) et la quatrième position par rapport à la deuxième position (L2), et

$\alpha$ indique un rapport d'une distance entre la première position et la troisième position sur une distance entre 1a première position et la deuxième position.

2. Procédé mis en œuvre par ordinateur pour traiter des informations relatives à une image omnidirectionnelle, le procédé comprenant :

générer une première image bidimensionnelle (2D) (E1) projetée à partir d'une première image omnidirectionnelle (O1) à l'aide d'une projection équirectangulaire, ERP, en définissant des points sur la première image omnidirectionnelle, qui coupent une ligne droite passant par une première position (L1) qui est le centre de la première image omnidirectionnelle et une deuxième position (L2) qui est le centre d'une deuxième image omnidirectionnelle, en un premier pôle (e1) et un deuxième pôle (e2), où le premier pôle (e1) de la première image omnidirectionnelle (O1) est défini comme pôle nord (N1) de la première image omnidirectionnelle (O1), et le deuxième pôle (e2) est défini comme pôle sud (S1) de la première image omnidirectionnelle (O1) ;

générer une deuxième image 2D (E2) projetée à partir de la deuxième image omnidirectionnelle (O2) à l'aide de l'ERP, en définissant des points sur la deuxième image omnidirectionnelle, qui coupent la ligne droite passant par la première position (L1) et la deuxième position (L2), en un troisième pôle (e3) et un quatrième pôle (e4), où le troisième pôle (e3) de la deuxième image omnidirectionnelle (O2) est défini comme pôle nord (N2) de la deuxième image omnidirectionnelle (O2), et le quatrième pôle (e4) est défini comme pôle sud (S2) de la deuxième image omnidirectionnelle (O2) ; et

générer une troisième image 2D (E3) correspondant à une image 2D projetée à partir d'une troisième image omnidirectionnelle (O3) en utilisant l'ERP en définissant des points sur la troisième image omnidirectionnelle (O3), qui coupent la ligne droite, en un cinquième pôle (e5) et un sixième pôle (e6), sur la base de la première image 2D et de la deuxième image 2D, la troisième image omnidirectionnelle (O3) étant centrée dans une troisième position (L3) entre la première position (L1) et la deuxième position (L2), où le cinquième pôle (e5) de la troisième image omnidirectionnelle (O3) est défini comme pôle nord de la troisième image omnidirectionnelle (O3), et le sixième pôle (e6) est défini comme pôle sud de la troisième image omnidirectionnelle (O3),

où la génération de la troisième image 2D (E3) comprend en outre l'identification de troisièmes coordonnées (p23) sur la troisième image 2D (E3) où une quatrième position est projetée à partir de la troisième position (L3) sur la troisième image 2D (E3), et les troisièmes coordonnées (p23) correspondent aux premières coordonnées (p21) sur la première image 2D (E1) où la quatrième position est projetée à partir de la première position (L1) sur la première image 2D (E1), et de deuxièmes coordonnées (p22) sur la deuxième image 2D (E2) où la quatrième position est projetée à partir de la deuxième position (L2) sur la deuxième image 2D (E2), respectivement, et où les premières coordonnées, les deuxièmes coordonnées et les troisièmes coordonnées ont la même coordonnée y et sont définies comme suit :

$$x3 = x1 - a \times (x1 - x2),$$

et

où :

x1 indique une coordonnée x des premières coordonnées, et un angle entre le pôle nord de la troisième image omnidirectionnelle (O3) et la quatrième position par rapport à la troisième position (L3),

x2 indique une coordonnée x des deuxièmes coordonnées et un angle entre le pôle nord (N1) de la première image omnidirectionnelle (O1) et la quatrième position par rapport à la première position (L1),

x3 indique une coordonnée x des troisièmes coordonnées, et un angle entre le pôle nord (N2) de la deuxième image omnidirectionnelle (O2) et la quatrième position par rapport à la deuxième position (L2), et

$\alpha$ indique un rapport d'une distance entre la première position et la troisième position sur une distance entre la première position et la deuxième position.

3. Procédé selon la revendication 1, comprenant en outre la conversion de la troisième image 2D (E3) en une quatrième image 2D,

où la troisième image 2D correspond à une image 2D projetée en définissant des points sur la troisième image omnidirectionnelle, qui coupent la ligne droite passant par la première position et la deuxième position, en un cinquième pôle et un sixième pôle, et

où la quatrième image 2D correspond à une image 2D projetée à partir de la troisième image omnidirectionnelle sur la base de pôles différents du cinquième pôle et du sixième pôle.

4. Procédé selon la revendication 1, comprenant en outre la transmission d'informations relatives à la troisième image omnidirectionnelle (O3) sur la base de la troisième image 2D (E3).

5. Procédé selon la revendication 1, où chacune de la première image omnidirectionnelle (O1), de la deuxième image omnidirectionnelle (O2) et de la troisième image omnidirectionnelle (O3) est respectivement rendue sous une forme sphérique.

6. Procédé selon la revendication 1, où la première image omnidirectionnelle (O1) est acquise par une première caméra (C1) située dans la première position, et la deuxième image omnidirectionnelle (O2) est acquise par une deuxième caméra (C2) située dans la deuxième position.

7. Procédé selon la revendication 1, où la troisième position est l'une d'une pluralité de positions quantifiées sur la ligne droite entre la première position et la deuxième position.

8. Procédé selon la revendication 7, où la troisième position est la position la plus proche d'un appareil destiné à afficher la troisième image omnidirectionnelle (O3) parmi la pluralité de positions quantifiées.

9. Appareil (800, 900) destiné à traiter des informations relatives à une image omnidirectionnelle, l'appareil comprenant :

une interface de communication (830, 930) ; et
un processeur (810, 910) couplé à l'interface de communication, où le processeur est configuré pour fonctionner selon l'une des revendications 1 à 8.

[Fig. 1]

[Fig. 2]

[Fig. 3]

E1

E2

P11

P12

e1

e2

e3

e4

[Fig. 4]

P2

$0 < a < 1$

E1

E3

$a*\lambda$

$\lambda$

E2

p21

p23

p22

L1

L3

L2

$a$

1

[Fig. 5]

[Fig. 6]

[Fig. 7]

| PROJECT FIRST OMNI-DIRECTIONAL IMAGE AS FIRST 2D IMAGE BY SETTING EPIPOLES OF FIRST OMNI-DIRECTIONAL IMAGE TO POLES, AND PROJECT SECOND OMNI-DIRECTIONAL IMAGE AS SECOND 2D IMAGE BY SETTING EPIPOLES OF SECOND OMNI-DIRECTIONAL IMAGE TO POLES | ~710 |

↓

| GENERATE THIRD 2D IMAGE CORRESPONDING TO THIRD OMNI-DIRECTIONAL IMAGE FROM FIRST 2D IMAGE AND SECOND 2D IMAGE | ~720 |

[Fig. 8]

[Fig. 9]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN WANG et al.** View synthesis for virtual walk through in real scene based on catadioptric omnidirectional images. *Cyberworlds, 2008 International conference on IEEE*, 22 September 2008